# EUROPÄISCHE PATENTSCHRIFT

(11) **EP 1 622 239 B1**
(45) Veröffentlichungstag und Bekanntmachung des Hinweises auf die Patenterteilung: **10.09.2014**
(21) Anmeldenummer: 05013075.6
(22) Anmeldetag: 17.06.2005
(51) Int. Cl.: B60R 16/02, H02G 11/00, H01H 1/58, H01R 13/72

(54) **Betätiger insbesondere für Fahrzeuge mit einem, mit einem Kabel versehenen, elektrischen Bauteil**
Actuator, in particular for vehicles, with an electrical component with a cable
Organe de commande, notamment pour véhicules, avec un elément électrique avec un câble

(30) Priorität: 31.07.2004 DE 102004037243
(43) Veröffentlichungstag der Anmeldung: 01.02.2006
(73) Patentinhaber: Huf Hülsbeck & Fürst GmbH & Co. KG, 42551 Velbert (DE)
(72) Erfinder: Spies, Wolfgang Uwe, 42781 Haan (DE)
(74) Vertreter: Mentzel, Norbert

(56) Entgegenhaltungen:
- WO-A-91/07792
- WO-A-03/062569
- DE-C1- 3 709 821
- US-A1- 2003 222 185

## Beschreibung

Die Erfindung richtet sich auf einen Betätiger, insbesondere für Fahrzeuge. Dieser Betätiger ist mit einem Träger am Fahrzeug befestigt. Auf der Außenseite des Trägers sitzt ein elektrisches Bauteil. Es ist ein elektrisches Kabel vorgesehen, dessen eines Kabelende am elektrischen Bauteil fest kontaktiert ist und damit ein Kabel-Festende bildet. Das andere Kabelende ist an einer im Fahrzeug beabstandeten Anschlussstelle elektrisch und mechanisch anschließbar oder ankuppelbar. Dieses andere Kabelende fungiert daher als Kabel-Anschlussende. Das Kabel weist zwischen seinem Kabel-Festende einerseits und seinem Kabel-Anschlussende andererseits zwar eine konstante Gesamtlänge auf, aber diese ist zwei Kabelabschnitte gegliedert. Ein erster Kabelabschnitt, der dem Kabel-Festende folgt, ist zu einer Schlaufe gelegt. Der zweite, bis zur elektrischen Anschlussstelle weiterlaufende Abschnitt bestimmt die Nutzlänge des Kabels. Am Träger und/oder am elektrischen Bauteil ist eine Kabelklemme angeordnet, die einen Durchlass für das elektrische Kabel aufweist. Dieser Durchlass nimmt das Kabel am Schlaufenende auf und begrenzt die Kabelschlaufe gegenüber der Kabelnutzlänge.

Ein solcher Betätiger ist aus der DE 37 09 821 C1 bekannt. Der dortige Betätiger besteht aus einem Schließzylinder, der mittels eines Schlüssels auf einen damit verbundenen Schalter einwirkt. Der Schalter ist baueinheitlich mit einem Gehäuse verbunden, das am Ende des Schließzylinders sitzt. Als Kabelklemme dient ein Halteteil, welches auf das Gehäuse des Schließzylinders aufgeklipst wird, wobei das Halteteil mittels einer Einbiegung ein vom Schalter ausgehendes Kabel an der Vorderseite des Schalters einklemmt. Die außerhalb des Halteteils liegende Kabelnutzlänge lässt sich nicht ohne Weiteres verändern; vielmehr muss dazu das Halteteil vom Gehäuse abgenommen und an der gewünschten abgeänderten Stelle des Kabels wieder neu auf das Gehäuse aufgeklipst werden. Das ist zeitaufwendig und umständlich.

Die US 2003/0222185 A1 zeigt eine Vorrichtung zur verstellbaren Halterung eines Kabels, die aus einem abgewinkelten Blech besteht. Während der eine Blechschenkel zur Befestigung der Vorrichtung dient, weist der andere Schenkel eine Vielzahl von Einschnitten auf, zwischen denen ein Kabel in Mäanderform eingelegt werden kann. Zwischen zwei benachbarten Einschnitten ist ein Mäanderbogen eingelegt und wird dort durch seine Umlenkung fixiert. Vor oder zwischen den Einschnitten kann ein Kabelteilstück in der gewünschten Länge fixiert werden. So ist die hinter der Vorrichtung befindliche Nutzlänge des Kabels veränderbar.

Die WO 03/062569 A1 zeigt einen Betätiger zum Öffnen einer Heckklappe eines Fahrzeugs. Der Betätiger ist in diesem Fall ein im Gehäuse des Betätigers sitzender Tastschalter, der über ein Kabel an eine elektrischen Steuerung eines Schlosses angeschlossen ist.

Es gibt verschiedene Anwendungen eines solchen Betätigers, z. B. bei Fahrzeugen unterschiedlicher Type. In Abhängigkeit vom Anwendungsfall muss das Kabel eine unterschiedliche Länge aufweisen, welche die Entfernung zwischen dem elektrischen Bauteil einerseits und einer Anschlussstelle für das Kabel andererseits überbrückt. Es ist daher erforderlich, elektrische Bauteile mit entsprechend unterschiedlicher Kabellänge herzustellen, bereitzuhalten und zu verbauen. Eine andere Möglichkeit besteht darin, Zwischenstücke mit Adaptern zwischen dem Anschlussende des Kabels und der elektrischen Anschlussstelle im Fahrzeug anzuordnen, wenn eine gegebene Kabellänge verlängert werden muss. Das ist kostenaufwendig und umständlich. Es ist andererseits auch nicht angängig, einen elektrischen Bauteil mit einem zu groß ausgebildeten Kabel bei kleinerer Entfernung der Anschlussstelle zu verwenden, weil das lose Kabelstück platzaufwendig verlegt werden muss. Ein loses Kabelstück im Fahrzeug darf aus Sicherheitsgründen nicht vorliegen.

Der Erfindung liegt die Aufgabe zugrunde, einen preiswerten Betätigers der im Oberbegriff des Anspruches 1 genannten Art zu entwickeln, der universell verwendbar ist und sich leicht an die jeweiligen räumlichen Verhältnisse anpassen lässt. Dies wird erfindungsgemäß dadurch erreicht, dass die Kabelschlaufe auf der Außenseite des Trägers anliegt und dass die Nutzlänge und die Länge der Schlaufe eine zueinander komplementäre, veränderliche Länge haben. Letzteres wird dadurch erreicht, dass der Durchlass das Kabel am Schlaufenende durchzugsfähig aber selbsthemmend aufnimmt. Damit ist die Kabelnutzlänge auf Kosten der Schlaufenlänge durch Herausziehen oder Einschieben einstellbar.

Der Träger und die Kabel-Schlaufe bilden dann eine kompakte Baueinheit, die stets platzsparend im Fahrzeug verbaut werden kann. Die Nutzlänge kann erfindungsgemäß, in Abhängigkeit vom Anwendungsfall, auf Kosten der Schlaufenlänge vor der Länge auf dem gewünschten Wert eingestellt werden. Damit ist es möglich, komplette, mit Kabeln versehene Bauteile in sehr großer Stückzahl herzustellen, die dann jedem Anwendungsfall leicht und schnell angepasst werden können. Das Kabel ist nämlich, wie gesagt, in der Klemme durchzugsfähig, aber selbsthemmend aufgenommen. Die große Stückzahl erlaubt eine kostengünstige Herstellung der erfindungsgemäßen elektrischen Bauteile.

Weitere Maßnahmen und Vorteile der Erfindung ergeben sich aus den Unteransprüchen, der nachfolgenden Beschreibung und den Zeichnungen. In den Zeichnungen ist die Erfindung in mehreren Ausführungsbeispielen dargestellt, und zwar als Betätiger mit einem elektrischen Bauteil. Es zeigen:
- Fig. 1: die perspektivische Ansicht auf die Rückseite vom Träger eines ersten Ausführungsbeispiels des erfindungsgemäßen Betätigers vor seinem Einbau ins Fahrzeug,
- Fig. 2: in einer analogen Darstellung zu Fig. 1, einen zweiten Anwendungsfall des gleichen Betätigers,
- Fig. 3: in Vergrößerung, die Rückansicht auf die Verkleidung eines elektrischen Bauteils vor seinem Einbau in den erfindungsgemäßen Betätiger von Fig. 1 und 2,
- Fig. 4: eine Querschnittsansicht durch ein Detail des Betätigers von Fig. 1 längs der dortigen, versprungenen Schnittlinie IV - IV,
- Fig. 5: ebenfalls in Vergrößerung, einen versprungenen Längsschnitt durch eine in Fig. 4 gezeigte Verkleidung des elektrischen Bauteils im Sinne der Schnittlinie V - V, wobei zwecks besserer Durchsicht ein oberer Teil der Verkleidung weggelassen wurde,
- Fig. 6: in einer der Fig. 4 entsprechenden Darstellung, eine zweite Ausführungsform des Betätigers,
- Fig. 7a: ebenfalls in einer zu Fig. 4 analogen schematischen Darstellung, ein drittes Ausführungsbeispiel eines Teilstücks des erfindungsgemäßen Betätigers vor seiner Montage am Gehäuse,
- Fig. 7b: den bereits in Fig. 7a gezeigten elektrischen Bauteil mit seiner Verkleidung nach seinem Einbau in den Betätiger, von dem lediglich ein Teilstück gezeigt ist,
- Fig. 8: eine vierte, dem Ausführungsbeispiel von Fig. 7a ähnliche Ausführungsform und
- Fig. 9: in Analogie zur Darstellung von Fig. 7b, eine fünfte Ausführungsform eines erfindungsgemäßen Betätigers und zwar nur in einem Bruchstück im Bereich des montierten elektrischen Bauteils.

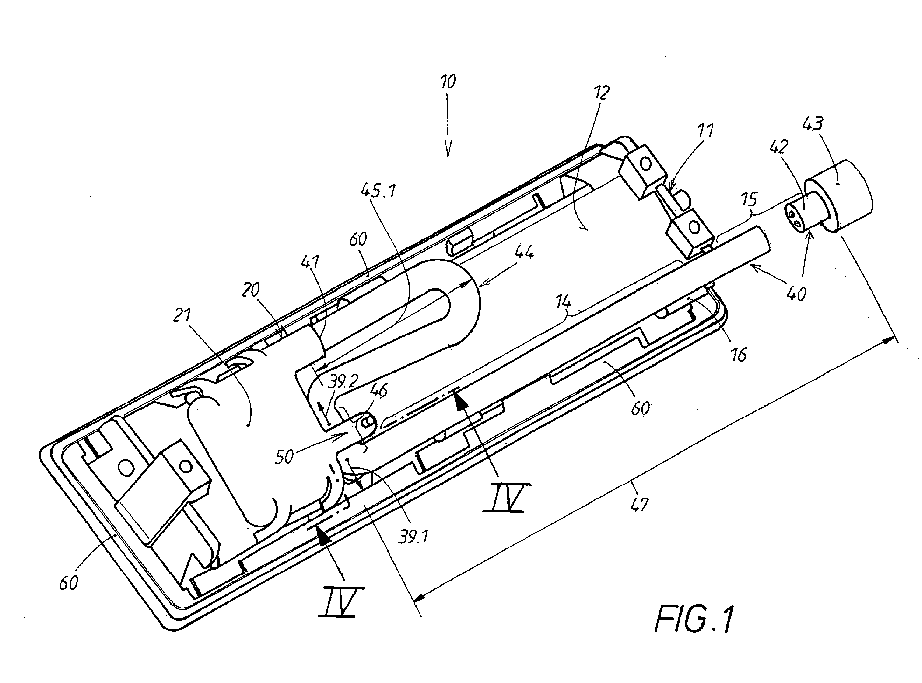

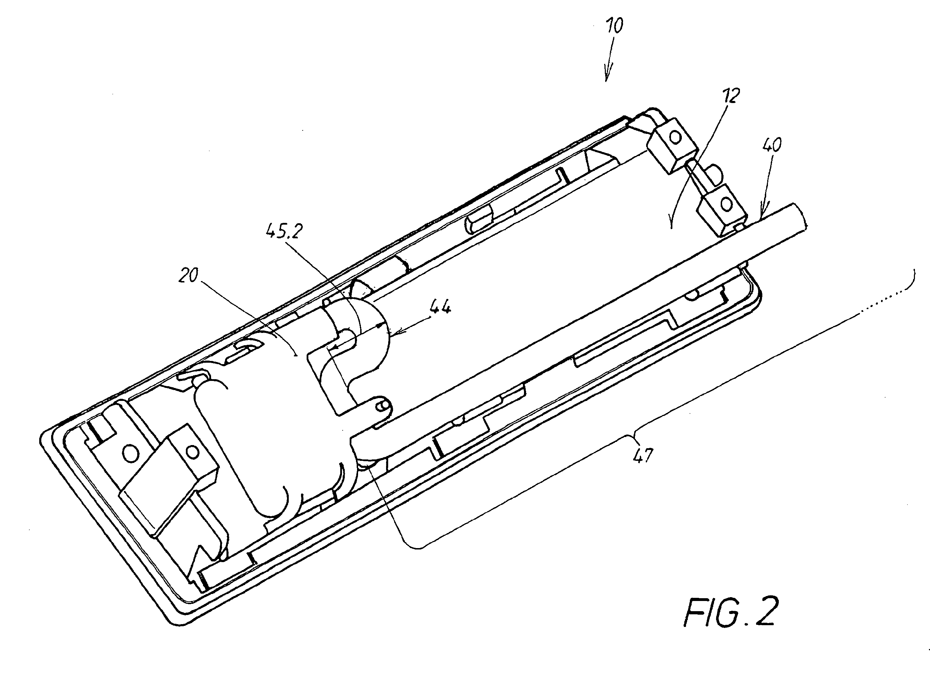

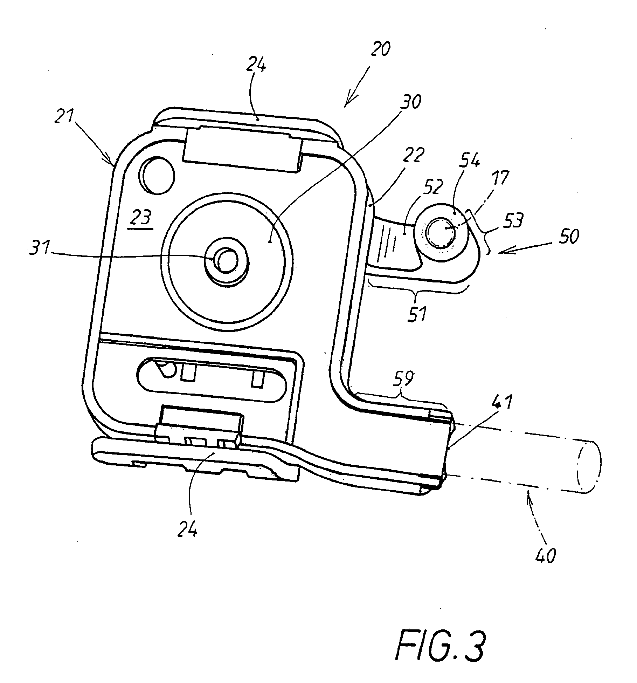

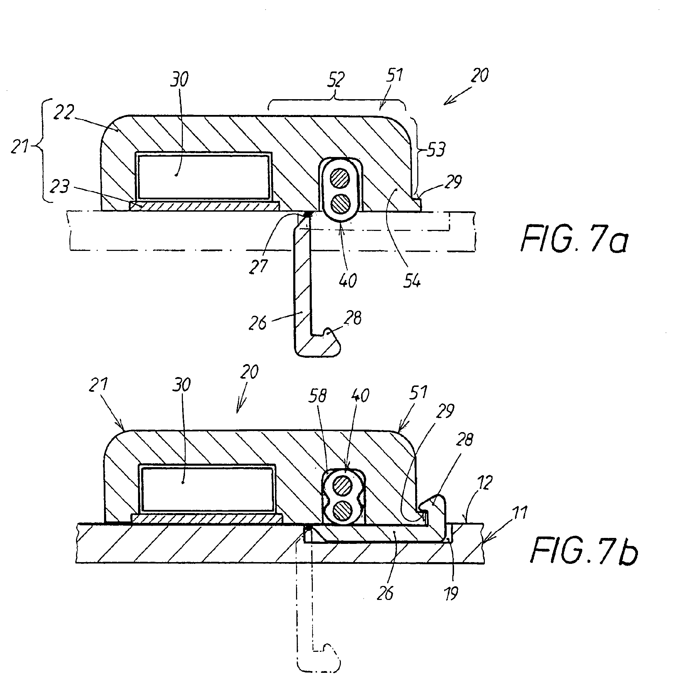

Wie bereits erwähnt wurde, ist in den Zeichnungen ein erfindungsgemäßer Betätiger 10 gezeigt, der für das Schloss an einer Heckklappe eines Fahrzeugs bestimmt ist. Man sieht auf die rückseitige Außenfläche eines Gehäuses, dessen Außenseite hier als Träger 11 fungiert. Das Gehäuse ist schalenförmig ausgebildet. Im Schaleninneren ist eine nicht näher gezeigte Griffklappe gelagert, die bei Betätigung mit einem hier auf der Außenseite des Trägers 11 befindlichen elektrischen Bauteil 20 zusammenwirkt. Von diesem Bauteil 20 ist in den Fig. 1 und 2 nur die Rückseite der Verkleidung 21 zu erkennen. Die Verkleidung 21 umschließt einen aus Fig. 3 konkret und Fig. 7a, 7b schematisch erkennbaren Tastschalter 30 mit einem aus Fig. 3 erkennbaren Betätigungsstift 31, der bei Betätigung der Griffklappe die verschiedenen Schaltstellungen im Inneren des Tastschalters 30 steuert. Die in den Figuren nicht sichtbare Öffnung des schalenförmigen Gehäuses ist von einer elastischen Membran überdeckt, die rahmenartig, an den mit 60 in Fig. 1 gekennzeichneten Stellen den Randbereich des schalenförmigen Gehäuses elastisch umgreift und damit das Schaleninnere des Gehäuses zusammen mit der dort gelagerten Griffklappe überdeckt.

Der elektrische Bauteil 20 ist mit einem elektrischen Kabel 40 verbunden. Das Kabel 40 ist mit seinem einen Ende 41 fest an den Kontakten im elektrischen Bauteil 20 angeschlossen, weshalb dieses Ende nachfolgend "Festende" genannt werden soll. Das andere Kabelende 42 ist an einer entfernten Anschlussstelle im Fahrzeug angeschlossen und soll daher als "Anschlussende" bezeichnet werden. Im vorliegenden Fall ist das Anschlussende 42 als eine elektrische Kupplung 43 ausgebildet, der eine nicht näher gezeigte elektrische Gegenkupplung als Anschlussstelle im Fahrzeug zugeordnet ist.

Der Kabelabschnitt, der dem Festende 41 folgt, ist erfindungsgemäß zu einer Schlaufe 44 gelegt, deren Schlaufenlänge, wie aus 45.1 von Fig. 1 und 45.2 von Fig. 2 zu entnehmen ist, veränderlich sein kann. Am Träger 11 sitzt nämlich eine Klemme 50, die das Schlaufenende 46 zwar selbsthemmend, aber durchzugfähig aufnimmt. Die Schlaufe 44 verläuft an der rückseitigen Außenseite 12 des Trägers 11. Dem aufgenommenen Schlaufenende 46 folgt eine außerhalb des Trägers 11 weiterlaufende Nutzlänge 47 des Kabels 40. Damit kann die Nutzlänge 47 des Kabels 40 dem jeweiligen Abstand zwischen dem Betätiger 10 und der Anschlussstelle im Fahrzeug angepasst werden. Trotz unterschiedlicher Anforderungen in der Praxis lässt sich so ein erfindungsgemäßer Betätiger 10 mit der genau passenden Nutzlänge 47 des Kabels 40 erzeugen, indem man das Kabel 40 an der Klemme 50 auf Kosten der Schlaufenlänge im Sinne des Pfeils 39.1 von Fig. 2 herauszieht, oder unter Verlängerung der Schlaufenlänge im Sinne des Pfeils 39.2 von Fig. 1 hineinschiebt.

Wie am besten aus Fig. 3 zu entnehmen ist, ist die Verkleidung 21 des elektrischen Bauteils 20 zweiteilig ausgebildet, bestehend aus einem kappenförmigen Oberteil 22 dessen Kappenöffnung von einem plattenförmigen Unterteil 23 bereichsweise abgedeckt wird. Der plattenförmige Unterteil 23 ist mit einem Ausbruch versehen, durch welchen der Betätigungsstift 31 vom Tastschalter 10 zugänglich ist. Die Verkleidung 21, und zwar im vorliegenden Fall der Oberteil 22, besitzen zwei einander gegenüberliegende Clipsbügel 24, die zur Steckmontage des Bauteils 20 am Träger 11 dienen. Dazu besitzt der Träger 11 randseitige Nasen, hinter welche beim Aufstecken des elektrischen Bauteils 20 die Clipsbügel 24 schnappen. Die Verkleidung 21 ist mit einem am besten aus Fig. 3 erkennbaren Einlass 59 für das Festende 41 des Kabels 40 versehen.

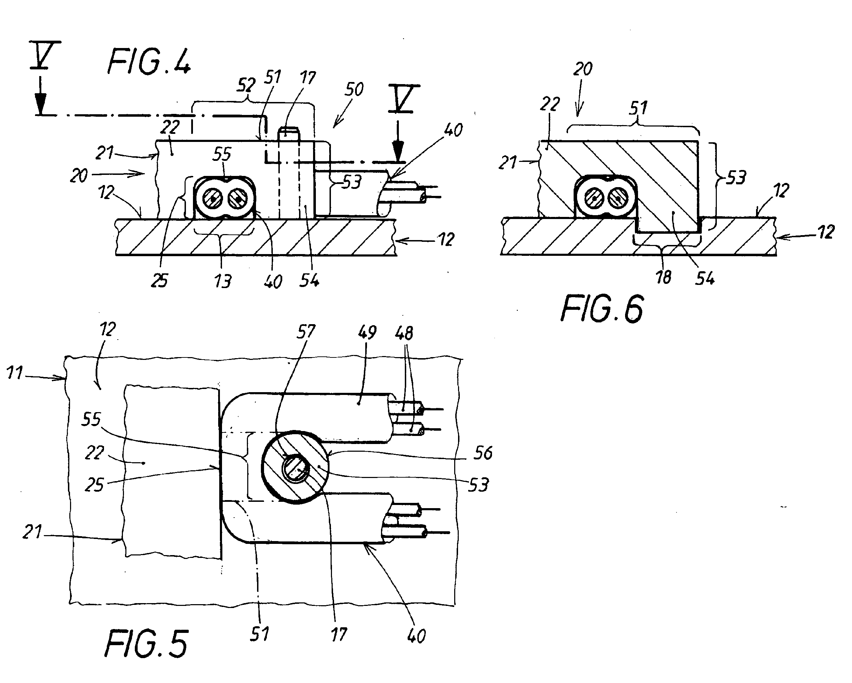

Im ersten Ausführungsbeispiel gemäß Fig. 1 bis 4 ist ein Teil 51 der Klemme 50 einstückig mit der Verkleidung 21 ausgebildet und zwar in Form eines L-förmigen Bügels. Wie am besten Fig. 4 zeigt, lässt sich der L-Bügel 51 in einen am Oberteil 22 der Verkleidung angeformten Oberschenkel 52 und einen davon abgewinkelt verlaufenden Seitenschenkel 53 gliedern. Das freie Ende 54 des Seitenschenkels 53 ist gegen die Außenseite 12 des Träger 11 gerichtet.

Zur Bildung der Klemme 50 trägt aber auch jener Flächenbereich 13 der Gehäuse-Außenseite 12 bei, der vom Bügel 51 übergriffen wird und, wie gesagt, als Träger 11 fungiert. Andererseits erzeugt auch noch die unterhalb des Bügels 51 liegende Seitenwand 25 vom Oberteil 22 der Verkleidung ein Teilstück der Klemme 51. Aus dem Bügel 51 und den letztgenannten Flächen 13, 25 entsteht ein Durchlass 55 für das Kabel 40, dessen Querschnitt im Klemmbereich radial und axial verformt wird, wie aus Fig. 4 und 5 zu ersehen ist. Die Verkleidung 21, insbesondere aber der Oberteil 22 bestehen aus elastomerem Material, das im Bereich des Durchlasses 55 reibungserhöhend wirksam ist und dadurch den Durchzug des Kabels im Sinne der Pfeile 39.1 und 39.2 noch mehr hemmt. Ein unbeabsichtigtes Herausziehen oder Hineindrücken des Kabels an der Klemme 51 ist damit ausgeschlossen.

Diese Querschnittsverformung wird begünstigt, weil das Kabel 40, ausweislich der Fig. 5, aus zwei elektrisch isolierten Leitungen 48 und einem sie lose umhüllenden Schlauch 49 bestehen. Das Kabel 40 wird hinter dem Durchlass 55 umgelenkt. Aus dem vor dem Durchlass 55, gemäß Fig. 1 sich ergebenden U-Verlauf der Schlaufe 44, entsteht die dort ersichtliche S-förmige Gesamtschlaufe, zu welcher ein Anfangsstück 14 der Kabel-Nutzlänge 47 beiträgt, weil es noch entlang der Außenfläche des Trägers 11 weiterläuft. Dieses Anfangsstück 14 wird durch ein am Träger 11 vorgesehenes Führungselement 16 bestimmt, dem sich dann das eigentliche Folgestück 15 des Kabels 40 anschließt.

Der Seitenschenkel 53 des Bügels 51 hat, wie aus Fig. 3 und vor allem Fig. 5 hervorgeht, ein Rundprofil 56. Das begünstigt die Umlenkung des Kabels 40. An der Auftreffstelle des freien Endes 54 vom Bügel 51 sollte eine Verankerung bezüglich der Gehäuse-Außenfläche vorgesehen sein. Diese besteht im ersten Ausführungsbeispiel von Fig. 1 bis 4 darin, dass am Träger 11 ein Vorsprung in Form eines abragenden Zapfens 17 abragt, während eine ihn aufnehmende Vertiefung in Form einer axialen Bohrung 57 im Seitenschenkel 53 vorgesehen ist. Der Zapfen 17 fährt in die Bohrung 57 ein, wenn der elektrische Bauteil 20 in der im Zusammenhang mit Fig. 3 beschriebenen Weise auf den Träger 11 aufgesetzt wird und dabei mit seinen Clipsbügeln 24 daran verrastet wird.

Wie bereits erwähnt wurde, zeigt die Fig. 6 eine Alternative Verankerung vom freien Ende 54 des Bügel-Seitenschenkels 53 im Träger 11. In diesem Fall ist an der Außenseite 12 des Trägers 11 eine Aussparung 18 vorgesehen, in die das verlängerte freie Ende 54 nach der Montage der Verkleidung eindringt.

Ein drittes Ausführungsbeispiel ist in den Fig. 7a, 7b gezeigt. Auch dort sind zur Benennung analoger Bauteile die gleichen Bezugszeichen wie im ersten Ausführungsbeispiel von Fig. 1 bis 4 benutzt, weshalb insoweit die bisherige Beschreibung dient. Es genügt lediglich auf die Unterschiede einzugehen. In diesem dritten Ausführungsbeispiel ist der Verkleidungs-Oberteil 22 des elektrischen Bauteils 20 mit einer angeformten Lasche 26 versehen. Die Lasche 26 ist über ein Filmscharnier 27 mit der Verkleidung 21 verbunden und lässt sich deswegen, wie Fig. 7a verdeutlicht, gegen den Seitenschenkel 53 des auch hier L-förmig ausgebildeten Bügels 51 umklappen. Im Anklappzustand wird die Lasche am Seitenschenkel verankert.

Im dritten Ausführungsbeispiel von Fig. 7a und 7b besteht die Verankerung einerseits aus einem Haken 28 am freien Ende der Lasche 26. Als Gegenelement zum Haken 28 besitzt das freie Ende 54 vom L-Seitenschenkel 53 eine Schulter 29. Die Schulter 29 entsteht durch einen endseitigen Absatz. In Abklapplage der Lasche 26 gemäß Fig. 7a kann das Kabel 40 ins Innere des Bügels 51 eingeführt werden. Dann wird die Lasche 26 zugeklappt und hintergreift dadurch, wie aus Fig. 7b hervorgeht, mit ihrem Haken 28 die am L-Bügel vorgesehene Schulter 29. Wie Fig. 7b zeigt, entsteht dadurch ein besonderer Durchlass 58 für das Kabel 40; das Kabel 40 wird nämlich allseitig vom Elastomermaterial der Verkleidung, des Bügels 51 und der Lasche 26 eingeschlossen und verformt. Auch in diesem Fall empfiehlt es sich, an der Außenseite 12 des Trägers 11 eine entsprechend profilierte Aussparung 19 vorzusehen, in welche, wie Fig. 7b zeigt, nach der Montage des elektrischen Bauteils 20 am Träger 11 die Lasche 26 versenkt angeordnet sein kann.

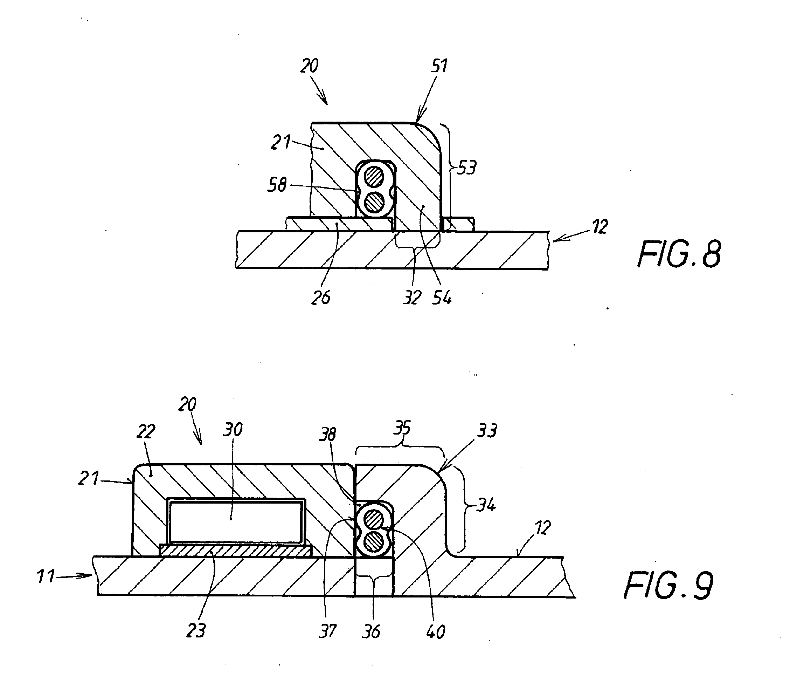

Das vierte Ausführungsbeispiel von Fig. 8 zeigt eine Alternative zum vorausgehenden dritten Ausführungsbeispiel. Es liegt eine alternative Ausbildung der Verankerung vom freien Ende 54 des Seitenschenkels vom L-Bügel 51 vor. Auch hier wird der Durchlass 58 mittels einer Lasche 26 verschlossen. In diesem Fall hat aber die Lasche 26 ein Loch 32, in welches, nach der Montage der Verkleidung, das freie Ende 54 vom Seitenschenkel 53 eingreift und am Träger 11 anliegt.

In Fig. 9 ist ein fünftes Ausführungsbeispiel schematisch gezeigt. Soweit die bisherigen Bezugszeichen verwendet werden, gilt die bisherige Beschreibung. Der wichtigste Unterschied ist darin zu sehen, dass hier ein L-förmiger Bügel 33 im Träger 11 angeformt ist und von dessen Außenfläche abragt. Auch in diesem Falle sollen die Bestandteile dieses Bügels 33 mit Seitenschenkel 34 und Oberschenkel 35 bezeichnet werden.

Der Seitenschenkel 34 des Bügels 33 sitzt am Träger 11 fest und besitzt an seinem freien Ende den abgewinkelt verlaufenden Oberschenkel 35. Der Oberschenkel 35 übergreift einen Flächenbereich 36 an der Außenfläche des Trägers 11, wo aus fertigungstechnischen Gründen für eine Spritzgussherstellung ein Loch unterhalb des Oberschenkels 35 sich befindet. Zwischen dem freien Ende des Oberschenkels 35 und dem Flächenbereich 36 wird die Bügelöffnung von einer Seitenwand 37 der Verkleidung 21 bzw. ihres Oberteils 22 verschlossen. So entsteht ein kombinierter Durchlass 38 zur form- und/oder kraftschlüssigen Fixierung des Kabels 40 am Bauteil 20, nachdem dieses am Träger 11 in der beschriebenen Weise montiert worden ist.

Der elektrische Bauteil könnte auch am Träger eines Türaußengriffs oder am Trägergehäuse von Schlössern sitzen.

### Bezugszeichenliste:

- 10: Betätiger
- 11: Träger von 10
- 12: Außenseite von 11
- 13: übergriffene Fläche von 12 (Fig. 4)
- 14: Anfangsstück der S-Schlaufe (Fig. 1)
- 15: Folgestück von 14 (Fig. 1)
- 16: Führungselement für 14 bzw. 15 (Fig. 1)
- 17: Vorsprung an 11, Zapfen (Fig. 4, 5)
- 18: Aussparung in 12 für 53 (Fig. 6)
- 19: Aussparung in 12 für 26 (Fig. 7b)
- 20: elektrischer Bauteil von 10
- 21: Verkleidung von 20
- 22: Oberteil von 21
- 23: Unterteil von 21
- 24: Clipsbügel an 21 bzw. 22 (Fig. 3)
- 25: Seitenwand von 21 für 50 (Fig. 4)
- 26: Lasche (Fig. 7a)
- 27: Flimscharnier an 26 (Fig. 7a)
- 28: Haken an 26 (Fig. 7a)
- 29: Schulter an 53 (Fig. 7a)
- 30: Tastschalter für 20
- 31: Betätigungsstift von 30 (Fig. 3)
- 32: Loch in 26 (Fig. 8)
- 33: L-förmiger Bügel (Fig. 9)
- 34: Seitenschenkel von 33 (Fig. 9)
- 35: Oberschenkel von 33 (Fig. 9)
- 36: Flächenbereich von 12 unter 33 (Fig. 9)
- 37: Seitenwand von 22 (Fig. 9)
- 38: Durchlass aus 33, 36, 37 (Fig. 9)
- 39.1: Herauszieh-Bewegung von 40 (Fig. 1)
- 39.2: Einschiebe-Bewegung von 40 (Fig. 1)
- 40: Kabel
- 41: erstes Kabelende von 40 (Kabel-Festende)
- 42: zweites Kabelende von 40 (Kabel-Anschlussende)
- 43: elektrische Kupplung
- 44: Kabelschlaufe aus 40
- 45.1: Schlaufenlänge von 44 (Fig. 1)
- 45.2: Schlaufenlänge von 44 (Fig. 2)
- 46: Schlaufenende von 44
- 47: Nutzlänge von 40
- 48: elektrische Leitungen in 40 (Fig. 5)
- 49: Schlauch für 48 (Fig. 5)
- 50: Kabelklemme (Fig. 1 bis 4)
- 51: Teil von 50, L-förmiger Bügel (Fig. 1 bis 4)
- 52: Oberschenkel von
- 53: Seitenschenkel von 51
- 54: freies Ende von 51
- 55: Durchlass für 40 (Fig. 4)
- 56: Rundprofil von 53 (Fig. 5)
- 57: Vertiefung von 53, Bohrung (Fig. 5)
- 58: Durchlass für 40 (Fig. 7a)
- 59: Einlass an 40 in 21 (Fig. 3)
- 60: Randbereich von 11 (Fig. 1)

## Patentansprüche

1. Betätiger (10), insbesondere für Fahrzeuge,
mit einem Träger (11), der am Fahrzeug befestigt ist,
mit einem elektrischen Bauteil (20), der auf einer Außenseite (12) des Trägers (11) sitzt,
mit einem elektrischen Kabel (40), dessen eines Kabelende (41) am elektrischen Bauteil (20) fest kontaktiert ist und damit ein Kabel-Festende bildet, während das andere Kabelende (42) an einer im Fahrzeug beabstandeten Anschlussstelle elektrisch und mechanisch anschließbar oder ankuppelbar ist und daher als Kabel-Anschlussende (42) fungiert,
wobei das Kabel (40) zwischen seinem Kabel-Festende (41) und seinem Kabel-Anschlussende (42) zwar eine konstante Gesantlänge aufweist, aber in zwei Kabelabschnitte gegliedert ist, nämlich
einen ersten, zu einer Schlaufe (44) gelegten Kabelabschnitt, der dem Kabel-Festende (41) folgt,
und einen zweiten, bis zur elektrischen Anschlussstelle weiterlaufenden Abschnitt, der die Nutzlänge (47) des Kabels hat,
wobei am Träger (11) und/oder am elektrischen Bauteil (20) eine Kabelklemme (50) angeordnet ist, die einen Durchlass (38; 55; 58) für das Kabel (40) aufweist und der Durchlass (38; 55; 58) das Kabel am Schlaufenende (46) aufnimmt und die Kabelschlaufe (44) gegenüber der Kabelnutzlänge (47) begrenzt,
**dadurch gekennzeichnet,**
**dass** die Kabelschlaufe (44) auf der Außenseite (12) des Trägers (11) anliegt,
und die Nutzlänge (47) und die Länge der Schlaufe eine zueinander komplementär veränderliche Länge haben, dadurch dass der Durchlass (38; 55; 58) das Kabel am Schlaufenende (46) durchzugsfähig aber selbsthemmend aufnimmt und damit die Kabel-Nutzlänge (47) auf Kosten der Schlaufenlänge (45.1; 45.2) durch Herausziehen (39.1) oder Einschieben (39.2) einstellbar ist.

2. Betätiger (10) nach Anspruch 1, **dadurch gekennzeichnet, dass** der Träger (11) ein Gehäuse des Betätigers für einen Verschluss am Fahrzeug ist
und dass der elektrische Bauteil (20) außerhalb oder innerhalb dieses Trägers (11) angeordnet ist.

3. Betätiger (10) nach einem oder mehreren der Ansprüche 1 oder 2, **dadurch gekennzeichnet, dass** der elektrische Bauteil (20) mit einer Verkleidung (21) versehen ist, die einen Einlass (59) für das Festende (41) des Kabels (40) besitzt,
dass der elektrische Bauteil (20) mittels seiner Verkleidung (21) an der Außenseite (12) des Trägers (11) befestigt ist
und dass wenigstens ein Teil (51) der Kabelklemme (50) einstückig mit der Verkleidung (21) ausgebildet ist.

4. Betätiger (10) nach Anspruch 3, **dadurch gekennzeichnet, dass** der elektrische Bauteil (20) als Schalter, insbesondere Tastschalter (30) ausgebildet ist und eine Schalterverkleidung aufweist.

5. Betätiger (10) nach Anspruch 3 oder 4, **dadurch gekennzeichnet, dass** die Verkleidung (21) aus elastomerem Material besteht, dessen Material im Bereich der Klemme (50) reibungserhöhend wirksam ist.

6. Betätiger (10) nach einem der Ansprüche 3 bis 5, **dadurch gekennzeichnet, dass** der Durchlass (55;58) für das Kabel (40) von einem Bügel (51) und einem vom Bügel (51) übegriffenen Flächenbereich des Trägers (11) oder der Verkleidung (21) der elektrischen Baueinheit (20) gebildet ist
und dass der Bügel (51) von der Verkleidung (21) und/oder dem Träger (11) abragt.

7. Betätiger (10) nach Anspruch 6, **dadurch gekennzeichnet, dass** der Bügel (51) L-förmig ausgebildet ist, bestehend aus einem an der Verkleidung (21) fest sitzenden Oberschenkel (52) und einem davon abgewinkelt verlaufenden Seitenschenkel (53),
und dass das freie Ende (54) des Seitenschenkels (53) gegen die Außenfläche (12) des Gehäuses (11) gerichtet ist.

8. Betätiger (10) nach einem oder mehreren der Ansprüche 1 bis 7, **dadurch gekennzeichnet, dass** das Kabel (40) im Bereich des Durchlasses (55) eine Querschnittsverformung aufweist, die durchzugs-hemmend auf das Kabel (40) einwirkt.

9. Betätiger (10) nach einem oder mehreren der Ansprüche 5 bis 8, **dadurch gekennzeichnet, dass** das Kabel (40) hinter dem Durchlass (55) umgelenkt wird
und die vor dem Durchlass (55) liegende U-förmige Schlaufe (44) zu einer S-förmigen Gesamt-Schlaufe ergänzt
und dass das Anfangsstück (14) der Kabelnutzlänge (47) Träger (11) entlanggeführt wird, während das Folgestück (15) des Kabels (40) den Träger (11) verlässt.

10. Betätiger (10) nach einem oder mehreren der Ansprüche 6 bis 9, **dadurch gekennzeichnet, dass** der Seitenschenkel (53) und/oder der Oberschenkel (52) des Bügels (51) wenigstens im Durchlassbereich (55) ein Rundprofil (56) aufweisen, das zur Umlenkung des Kabels (40) nutzbar ist.

11. Betätiger (10) nach einem oder mehreren der Ansprüche 6 bis 10, **dadurch gekennzeichnet, dass** das freie Ende (54) des Seitenschenkels (53) vom Bügel (51) im Träger (11) und/oder in der Verkleidung (21) verankert ist.

12. Betätiger (10) nach Anspruch 11, **dadurch gekennzeichnet, dass** zwischen dem Träger (11) einerseits und dem Seitenschenkel (53) vom Bügel (51) andererseits ein Vorsprung und eine Vertiefung zur Aufnahme des Vorsprungs angeordnet sind.

13. Betätiger (10) nach Anspruch 12, **dadurch gekennzeichnet, dass** der Vorsprung aus einem vom Träger (11) abragenden Zapfen (17) gebildet ist, während die Vertiefung aus einer Bohrung (57) im Seitenschenkel (53) besteht, in welche der Zapfen (17) bei der Montage der Verkleidung (21) einsteckbar ist.

14. Betätiger (10) nach Anspruch 12, **dadurch gekennzeichnet, dass** an der Außenseite (12) des Trägers (11) eine Aussparung (18) angeordnet ist, in die
das freie Ende (54) vom Seitenschenkel (53) des Bügels (51) nach der Montage der Verkleidung (21) eindringt.

15. Betätiger (10) nach einem oder mehreren der Ansprüche 6 bis 11, **dadurch gekennzeichnet, dass** der Bügel (51) an der Verkleidung (21) sitzt und an der Verkleidung (21) eine Lasche (26) angeformt ist,
dass die Lasche (26) im Gebrauchsfall die Bügelöffnung verschließt und
dass ein Bereich der Innenfläche der Lasche (26) den Durchlass (58) für das Kabel (40) miterzeugt.

16. Betätiger (10) nach Anspruch 15, **dadurch gekennzeichnet, dass** die Lasche (26) über ein Filmscharnier (57) mit der Verkleidung (21) verbunden und im Gebrauchsfall gegen den Seitenschenkel (53) des L-förmigen Bügels (51) geklappt ist
und dass die Lasche (26) im Anklappzustand am Seitenschenkel (53) verankert ist.

17. Betätiger (10) nach Anspruch 15 oder 16, **dadurch gekennzeichnet, dass** die Fläche des Trägers (11) einen Ausbruch (29) aufweist, in welchen die Lasche (26) der montierten Verkleidung (21) versenkt angeordnet ist.

18. Betätiger (10) nach einem der Ansprüche 15 bis 17, **dadurch gekennzeichnet, dass** die Lasche (26) an ihrem freien Ende einen Haken (28) aufweist und dass nach der Montage der Verkleidung (21) am Träger (11) der Haken (28) eine Schulter (29) am freien Ende (54) des Seitenschenkels (53) vom Bügel (51) hintergreift.

19. Betätiger (10) nach einem der Ansprüche 15 bis 17, **dadurch gekennzeichnet, dass** die Lasche (26) ein Loch (32) aufweist,
und dass nach Montage der Verkleidung das freie Ende (54) des Seitenschenkels (53) vom Bügel (51) ins Loch (32) eingreift.

20. Betätiger (10) nach Anspruch 6 oder 8, **dadurch gekennzeichnet, dass** der Bügel (33) an der Außenfläche (12) des Trägers (11) angeformt ist,
dass die Bügelöffnung einer Seitenwand (37) der am Träger (11) montierten Verkleidung (21) zugekehrt ist
und dass der Bügel (33) und die Seitenwand (37) der Verkleidung (21) den Durchlass (38) für das Kabel bilden.

21. Betätiger (10) nach Anspruch 20, **dadurch gekennzeichnet, dass** der Bügel (33) L-förmig ausgebildet ist, bestehend aus einem am Träger (11) fest sitzenden Seitenschenkel (34) und einem davon abgewinkelt verlaufenden Oberschenkel (35)
und dass der Oberschenkel (35) des Bügels (33) einen Flächenbereich (36) des Trägers (11) übergreift, der zwischen dem festen Seitenschenkel (34) und der Seitenwand (37) der montierten Verkleidung (21) verläuft.

## Claims

1. Actuator (10), in particular for vehicles,
with a support (11) that can be attached to the vehicle,
with an electrical component (20), that sits on one outer side (12) of the support (11),
with an electrical cable (40), one end of the cable (41) is permanently contacted to the electrical component (20) and, thus, forms a fixed end of the cable, whilst the other end of the cable (42) can be electrically and mechanically connected or coupled to a distant connection point in the vehicle and, thus, has the function of the connection end of the cable (42),
whereby, however, the cable (40) features a constant overall length between its fixed end of the cable (41) and its connection end of the cable (42), but is divided into two sections of cable, namely,
a first part, to a section of cable in a loop (44) that follows the fixed end of the cable (41),
and a second part, to the section continuing to the electrical connection point that has the effective length of the cable (47),
whereby, a cable clamp (50) is arranged on the support (11) and/or an electrical component (20) that features an aperture (38; 55; 58) for the cable (40) and the aperture (38; 55; 58) accepts the cable at the loop end of the cable (46) and restricts the loop of the cable (44) compared to the effective length of the cable (47),
**characterized in that**
the loop of the cable (44) rests on the outer side (12) of the support (11),
and the effective length (47) and length of the loop have a changing length complementary to each other, thereby, the aperture (38; 55; 58) accepts the cable at the end of the loop (46) capable of passing through, but self-locking and, thus, the effective length of the cable (47) can be adjusted by pulling out (39.1) or pushing in (39.2), to the detriment of the length of the loop (45.1; 45.2).

2. Actuator (10) according to claim 1, **characterized in that** the support (11) is a housing of the actuator for an interlock on the vehicle
and that the electrical component (20) is arranged outside or inside the support (11).

3. Actuator (10) according to one or more of the claims 1 or 2, **characterized in that** the electrical component (20) is equipped with shroud (21) that has an inlet (59) for the fixed end (41) of the cable (40),
that the electrical component (20) is attached to the outer side (12) of the support (11) by the shroud (21)
and that a minimum of one part (51) of the cable clamp (50) is formed with the shroud (21) as a single part.

4. Actuator (10) according to claim 3, **characterized in that** the electrical component (20) is formed as a switch, in particular a pushbutton (30) and features a switch shroud.

5. Actuator (10) according to claim 3 or 4, **characterized in that** the shroud (21) comprises of elastomer material in the area of the clamp (50), the material must enhance friction.

6. Actuator (10) according to one of the claims 3 to 5, **characterized in that** the aperture (55; 58) for the cable (40) is formed by a bracket (51) and an area of the surface of the support (11) overlapped by the bracket (51) or the shroud (21) of the electrical component (20)
and that the bracket (51) protrudes from the shroud (21) and/or the support (11).

7. Actuator (10) according to claim 6, **characterized in that** the bracket (51) is formed as an L shape, comprising of a fixed leg (52) on the shroud (21) and a side leg (53) at an angle to the leg (52),
and that the free end (54) of the side leg (53) is aligned to the outer surface (12) of the housing (11).

8. Actuator (10) according to one or more of the claims 1 to 7, **characterized in that** the cable (40) in the area of the aperture (55) features cross-section deformation that influences inhibition of passage of the cable (40).

9. Actuator (10) according to one or more of the claims 5 to 8, **characterized in that** the cable (40) to the rear of the aperture (55) is deflected and the U-shaped loop (44) in front of the aperture (55) is supplemented by a complete S-shaped loop
and that the start piece (14) of the effective length of the cable (47) is routed along the support (11), whilst the subsequent piece (15) of the cable (40) exits the support (11).

10. Actuator (10) according to one or more of the claims 6 to 9, **characterized in that** the side leg (53) and/or leg (52) of the bracket (51) at least feature(s) a round profile (56) in the area of the aperture (55) that can be utilized for deflecting the cable (40).

11. Actuator (10) according to one or more of the claims 6 to 10, **characterized in that** the free end (54) of the side leg (53) is anchored by the bracket (51) in the support (11) and/or in the shroud (21).

12. Actuator (10) according to claim 11, **characterized in that**, on the one hand, there is a protrusion between the support (11) and the side leg (53) of the bracket (51) and on the other side an indentation to accept the protrusion.

13. Actuator (10) according to claim 12, **characterized in that** the protrusion is formed by one of the spigots (17) projecting from the support (11), whist the indentation comprises of a hole (57) in the side leg (53), in which the spigot (17) can be inserted when installing the shroud (21).

14. Actuator (10) according to claim 12, **characterized in that** a recess (18) is arranged on the outside (12) of the support (11), into which the free end (54) of the side leg (53) of the bracket (51) penetrates after the shroud (21) is installed.

15. Actuator (10) according to one or more of the claims 6 to 11, **characterized in that** the bracket (51) sits on the shroud (21) and a strap (26) is formed on the shroud (21).
that, when in use, the strap (26) closes the aperture of the bracket and
that an area of the internal area of the strap (26) also creates a passage (58) for the cable (40).

16. Actuator (10) according to claim 15, **characterized in that** the strap (26) is connected to the shroud (21) by an integral hinge (57) and, when in use, is folded against the side leg (53) of the L-shaped bracket (51)
and, when folded down, the strap (26) is anchored to the side leg (53.)

17. Actuator (10) according to claim 15 or 16, **characterized in that** the surface of the support (11) features a cutaway (29) into which the strap (26) of the installed shroud (21) is arranged flush.

18. Actuator (10) according to one of the claims 15 to 17, **characterized in that** the strap (26) features a hook (28) at its free end and, after the shroud (21) is installed on the support (11), the hook (28) grips into a shoulder (29) on the free end (54) of the side leg (53) of the bracket (51).

19. Actuator (10) according to one of the claims 15 to 17, **characterized in that** the strap (26) features a hole (32),
and, after installation of the shroud, the free end (54) of the side leg (53) of the bracket (51) engages in the hole (32).

20. Actuator (10) according to claim 6 or 8, **characterized in that** the bracket (33) is formed on the outer surface (12) of the support (11),
that the aperture in the bracket turns towards a sidewall (37) of the shroud (21) installed on the support (11)
and that the bracket (33) and sidewall (37) of the shroud (21) form the passage (38) for the cable.

21. Actuator (10) according to claim 20, **characterized in that** the bracket (33) is an L-shape, comprising of a fixed side leg (34) on the support (11) and a leg (35) routed at an angle
and that the leg (35) of the bracket (33) overlaps an area (36) of the support (11) that runs between the fixed side leg (34) and sidewall (37) of the installed shroud (21).

## Revendications

1. Organe de commande (10), notamment pour véhicules,
comprenant un support (11) fixé contre le véhicule,
comprenant un composant électrique (20) en assise sur un côté extérieur (12) du support (11),
comprenant un câble électrique (40) dont une extrémité (41) est fermement en contact avec le composant électrique (20) et forme ainsi une extrémité fixe de câble, tandis que l'autre extrémité (42) du câble est raccordable ou couplable électriquement et mécaniquement à un port de raccordement distant dans le véhicule et qu'il officie ainsi d'extrémité (42) de raccordement de câble,
sachant que le câble (40) présente une longueur totale certes constante entre son extrémité fixe (41) et son extrémité de raccordement (42), mais qu'il est organisé en deux segments, à savoir
un premier segment de câble posé en boucle (44) et qui suit l'extrémité fixe (41) de câble,
et un second segment de prolongement jusqu'au port de raccordement électrique et qui possède la longueur utile (47) du câble,
sachant que sur le support (11) et/ou sur le composant électrique (20) est agencé une borne à câble (50) présentant un orifice (38 ; 55 ; 58) de passage du câble (40), et que cet orifice (38 ; 55 ; 58) reçoit le câble à l'extrémité de la boucle (46) et limite la boucle de câble (44) par rapport à la longueur utile (47) du câble,
**caractérisé en ce que**
la boucle de câble (44) applique sur le côté extérieur (12) du support (11),
et que la longueur utile (47) et la longueur de la boucle présentent réciproquement une longueur complémentairement variable du fait que l'orifice (38 ; 55 ; 58) reçoit le câble à l'extrémité de boucle (46) en permettant sa traversée mais en l'autobloquant, ce qui permet d'ajuster la longueur utile (47) du câble au détriment de la longueur de boucle (45.1 ; 45.2) en tirant vers l'extérieur (39.1) ou poussant vers l'intérieur (39.2).

2. Organe de commande (10) selon la revendication 1, **caractérisé en ce que** le support (11) est un boîtier de l'organe de commande pour une fermeture située contre le véhicule
et **en ce que** le composant électrique (20) est agencé à l'extérieur ou à l'intérieur de ce support (11).

3. Organe de commande (10) selon l'une ou plusieurs des revendications 1 ou 2, **caractérisé en ce que** le composant électrique (20) est doté d'un capotage (21) présentant un orifice (59) permettant à l'extrémité fixe (41) du câble (40) de pénétrer,
**en ce que** le composant électrique (20) est fixé au moyen de son capotage (21) contre le côté extérieur (12) du support (11)
et **en ce qu'**au moins une partie (51) de la borne de câble (50) est configurée comme faisant corps monobloc avec le capotage (21).

4. Organe de commande (10) selon la revendication 3, **caractérisé en ce que** le composant électrique (20) est configuré comme commutateur, en particulier comme commutateur à touche (30) et qu'il comporte un capotage de commutateur.

5. Organe de commande (10) selon la revendication 3 ou 4, **caractérisé en ce que** le capotage (21) se compose de matériau élastomère ayant pour effet d'accroître la friction dans la zone de la borne (50).

6. Organe de commande (10) selon l'une des revendications 3 à 5, **caractérisé en ce que** l'orifice de passage (55 ; 58) du câble (40) est formé par un étrier (51) et par une surface, traversée par l'étrier (51), du support (11) ou du capotage (21) de l'unité électrique (20)
et **en ce que** l'étrier (51) fait saillie du capotage (21) et/ou du support (11).

7. Organe de commande (10) selon la revendication 6, **caractérisé en ce que** l'étrier (51) est configuré en L se composant d'une branche supérieure (52) en assise ferme contre le capotage (21) et d'une branche latérale (53) qui en part en formant un angle,
et **en ce que** l'extrémité libre (54) de la branche latérale (53) est dirigée vers la surface extérieure (12) du boîtier (11).

8. Organe de commande (10) selon l'une ou plusieurs des revendications 1 à 7, **caractérisé en ce que** le câble (40) présente une déformation de sa section dans la zone de l'orifice de passage (55), déformation qui a pour effet d'inhiber le passage du câble (40).

9. Organe de commande (10) selon l'une ou plusieurs des revendications 5 à 8, **caractérisé en ce que** le câble (40) en aval de l'orifice de passage (55) est renvoyé et complète
la boucle en U (44) se trouvant en amont de l'orifice de passage (55) pour former une boucle complète en forme de S
et **en ce que** la partie initiale (14) de la longueur utile (47) du câble est conduite le long d'un support (11), tandis que la partie suivante (15) du câble (40) quitte le support (11).

10. Organe de commande (10) selon l'une ou plusieurs des revendications 6 à 9, **caractérisé en ce que** la branche latérale (53) et/ou la branche supérieure (52) de l'étrier (51) présentent, au moins dans la zone de passage (55), un profil rond (56) utilisable pour renvoyer le câble (40).

11. Organe de commande (10) selon l'une ou plusieurs des revendications précédentes 6 à 10, **caractérisé en ce que** l'extrémité libre (54) de la branche latérale (53) de l'étrier (51) est ancrée dans le support (11) et/ou dans le capotage (21).

12. Organe de commande (10) selon la revendication 11, **caractérisé en ce qu'**entre le support (11) d'une part et la branche latérale (53) de l'étrier (51) d'autre part sont agencés une saillie et un creux recevant ladite saillie.

13. Organe de commande (10) selon la revendication 12, **caractérisé en ce que** la saillie est formée par un pivot (17) faisant saillie hors du support (11), tandis que le creux se compose d'un alésage (57) dans la branche latérale (53) dans laquelle il est possible d'enficher le pivot (17) lors du montage du capotage (21).

14. Organe de commande (10) selon la revendication 12, **caractérisé en ce que** sur le côté extérieur (12) du support (11) est agencé un évidement (18) dans lequel l'extrémité libre (54) de la branche latérale (53) de l'étrier (51) pénètre après le montage du capotage (21).

15. Organe de commande (10) selon l'une ou plusieurs des revendications 6 à 11, **caractérisé en ce que** l'étrier (51) est en assise contre le capotage (21) et qu'une patte (26) a été formée contre le capotage (21),
**en ce que** lors de l'utilisation, la patte (26) obture l'orifice formé par l'étrier et
**en ce que** la surface intérieure de la patte (26) concourt à générer l'orifice de passage (58) du câble (40).

16. Organe de commande (10) selon la revendication 15, **caractérisé en ce que** la patte (26) est reliée au capotage (21) via une charnière (57) pelliculaire et que lors de l'utilisation elle se trouve repliée contre la branche latérale (53) de l'étrier en L (51)
et **en ce que** la patte (26) est ancrée contre la branche latérale (53) lorsque dans l'état basculé en contact.

17. Organe de commande (10) selon la revendication 15 ou 16, **caractérisé en ce que** la surface du support (11) présente une ébréchure (29) dans laquelle la patte (26) du capotage (21) montée est agencée en creux.

18. Organe de commande (10) selon l'une des revendications 15 à 17, **caractérisé en ce que** la patte (26) présente à son extrémité libre un crochet (28) et
**en ce qu'**après le montage du capotage (21) contre le support (11) le crochet (28) pénètre derrière un épaulement (29) contre l'extrémité libre (54) de la branche latérale (53) de l'étrier (51).

19. Organe de commande (10) selon l'une des revendications 15 à 17, **caractérisé en ce que** la patte (26) présente un trou (32),
et **en ce qu'**après le montage du capotage l'extrémité libre (54) de la branche latérale (53) de l'étrier (51) pénètre dans le trou (32).

20. Organe de commande (10) selon la revendication 6 ou 8, **caractérisé en ce que** l'étrier (33) est moulé contre la surface extérieure (12) du support (11),
**caractérisé en ce que** l'orifice d'étrier est tourné vers une paroi latérale (37) du capotage (21) monté contre le support (11)
et **en ce que** l'étrier (33) et la paroi latérale (37) du capotage (21) forment l'orifice de passage (38) du câble.

21. Organe de commande (10) selon la revendication 20, **caractérisé en ce que** l'étrier (33) est configuré en L et comprend une branche latérale (34) en assise ferme contre le support (11) et une branche supérieure (35) qui en part en formant un angle
et **en ce que** la branche supérieure (35) de l'étrier (33) traverse une surface (36) du support (11), surface qui se situe entre la branche latérale fixe (34) et la paroi latérale (37) du capotage monté (21).
